# EUROPÄISCHE PATENTANMELDUNG

(11) **EP 3 206 357 A1**
(43) Veröffentlichungstag der Anmeldung: **16.08.2017**
(21) Anmeldenummer: 16154824.3
(22) Anmeldetag: 09.02.2016
(51) Int. Cl.: H04L 29/06

(54) **EINSATZ EINES NICHT LOKALEN KRYPTOGRAPHIE-VERFAHRENS NACH AUTHENTIFIZIERUNG**

(71) Anmelder: Secunet Security Networks Aktiengesellschaft, 45138 Essen (DE)
(72) Erfinder: BOECKELER, Gregor, 45128 Essen (DE); CÖLLE, Niels, 45128 Essen (DE); MAIER, Thomas, 45128 Essen (DE); STOLL, Michael, 45128 Essen (DE); SCHÄFFNER, Johannes, 45128 Essen (DE); WEHR, Stephan, 45128 Essen (DE)
(74) Vertreter: Harrison, Robert John

(57) **Zusammenfassung**

Zukünfitg stehen wohl keine plattform-übergreifenden/browser-unabhängige Verfahren für Webdiesntleistungen mit Tokens zur Verfügung, weil diese aus Sicherheitsgründen abgeschaltet werden. Ein Verfahren wird deswegen vorgestellt, mit folgenden Schritten: Aufrufen (400) einer externen Applikation (140) über eine lokale Anwendung (110), die auf einer lokalen Einheit (10) installiert ist; Erzeugen (410) eines URI-Schema mit Parametern; Aufrufen (420) eines Authenticators (120) über die lokale Anwendung (110) durch das erzeugte URI-Schema; und Erzeugung (435) eines Ergebnisses von dem Authenticator (120).

## Beschreibung

Die Erfindung betrifft ein Verfahren für den Einsatz von Kryptographie-Verfahren und ein System zur Durchführung des Verfahrens.

### Stand der Technik

Die Authentisierung mit sogenannten Tokens von Webservices bzw. Webdienstleistungen wird bisher über browser-spezifische Schnittstellen oder über sogenannte NPAPI-Schnittstelle (z.B. Java, PKCS#11,..) realisiert. Solche Tokens können entweder Hard- oder Software sein und neuerdings werden biometrische Identifikationsmerkmale, wie Fingerabdrücke oder Irisscans, verwendet. Aufgrund von Sicherheitsbedenken werden diese Schnittstellen in modernen Browsern immer weiter abgeschaltet und es stehen demzufolge künftig keine plattform-übergreifende und browser-unabhängige Verfahren für den Einsatz eines Kryptographie-Verfahrens z.B. für Webdienstleistungen mit Tokens zur Verfügung.

Aus dem Stand der Technik sind verschiedene Patentanmeldungen bzw. Patente bekannt, welche Kryptographie- und Authentifizierungsverfahren beschreiben. Dieser bekannte Stand der Technik offenbart neue Protokolle oder Abwandlungen von bekannten Protokollen sowie spezielle kryptografische Verfahren, welche eine spezifische Umgebung voraussetzen.

Zum Beispiel offenbart die deutsche Patentanmeldung DE 102 23 551 (Siemens AG) ein Datenkommunikationssystem mit verschiedenen Klienten, die auf ein Computer-Programm zugreifen können. Bei dem offenbarten Datenkommunikationssystem wird ein Klient für den Zugriff auf die Daten lediglich für einen bestimmten Zeitraum authentifiziert. Nach Ablauf dieses Zeitraums muss der Klient wieder authentifiziert werden.

Aus der europäischen Patentanmeldung Nr. EP 2 296 337 A1 (Gemalto) ist auch ein Verfahren zum Schutz des Zugreifens von Daten offenbart. Die Daten sind nur über einen einmaligen ("one-time") Uniform Ressource Locator (URL) erreichbar. Dieser einmalige URL wird durch eine Adresse und einem geteilten Geheimwert erzeugt.

US Patent Nr. US 6,446,204 B1 (Argo) offenbart ein Verfahren und ein System zur Realisierung eines Authentifizierungsvorgangs in einem Webserver. In diesem Patent wird das Authentifizierungsverfahren über mehrere, voneinander unabhängigen Servern durchgeführt.

US Patentnummer US 7,320,024 B2 offenbart ein System zum Verfügungsstellen von Inhalten von einem Webserver, welcher einen Authentifizierungsserver aufweist. Der Webserver stellt den Inhalt einem Nutzer nach Eingabe einer Nutzererkennung (Identifikator) zur Verfügung.

Aus dem US Patent Nr. US 8,769,651 B2 (SecureAuth) ist ein System für eine mobile Vorrichtung bekannt, welche ein Token abspeichert, das nach Durchführung eines Authentifizierungsverfahrens auf der mobilen Vorrichtung abgespeichert wird.

Die internationale Patentanmeldung WO 2010/132458 A2 (Microsoft) offenbart eine sogenannte Challenge zur Authentifizierung von Zugriffsrechten.

### Kurzfassung der Erfindung

Ein Verfahren für die Anwendung von Kryptographie-Verfahren z.B. einer Signatur, einer Verschlüsselung oder einer Authentisierung wird beschrieben. Das Verfahren umfasst die folgenden Schritte: Aufrufen einer externen Applikation über eine lokale Anwendung z.B. Browser, die auf einer lokalen Einheit installiert ist; Erzeugen eines URI-Schemas mit Parametern und Aufrufen eines Authenticators über die lokale Anwendung durch das erzeugte URI-Schema und Erzeugung eines Ergebnisses von dem Authenticator. Durch die Erzeugung des URI-Schemas auf einen externen Rechner und des Aufrufs über die lokale Anwendung ist ein vereinfachter Sicherheitszugriff durch die externe Applikation möglich, da der Aufruf keine Softwaremodule oder Ports verwendet, welche sicherheitsgefährdet sind. Das URI-Schema wird sowohl von der lokalen Anwendung als auch von dem Authenticator erkannt werden. Der einfache Zugriff aus einem Netzwerk (dem "Web") auf den Authenticator ist daher möglich.

In einem weiteren Aspekt des Verfahrens wird das Ergebnis an die externe Applikation auf einem externen Rechner z.B. Webserver weitergeleitet und von der externen Applikation verarbeitet. Das Ergebnis ist zum Beispiel Informationen über die Zugriffsrechte auf der Applikation, verschlüsselte Daten, eine Signatur oder weitere verfahrensbezogene Daten.

In einem weiteren Aspekt des Verfahrens kann ein Identifikator z.B. Passwort, PIN-Code, o.dgl. von einem Anwender durch den Authentikator vor Ausgeben des Ergebnisses abgefragt werden. Der Anwender gibt dann seinen Identifikator ein und wird ggfs. autorisiert. In einem weiteren Aspekt des Verfahrens verlangt der Authentikator das Zugreifen auf eine Sicherheitsvorrichtung vor Ausgeben des Ergebnisses. Die Sicherheitsvorrichtung kann z. B. einen NFC-Chip, einen USB-Stick, eine auf einem Datenträger gespeicherte Datei usw. sein.

In einem weiteren Aspekt des Verfahrens ist das Ergebnis von dem Authentikator verfahrensbezogene Daten, welche an einen externen Rechner weitergeleitet wird.

Beschrieben ist ebenfalls eine lokale Einheit mit einem Prozessor, einer Graphikkarte und einem Speicherplatz. Der Prozessor kann Ansichten von einer lokalen Anwendung wie z.B. ein Browser mit Hilfe der Graphikkarte auf einer Anzeige darstellen. Der Prozessor kann auch einen Authentikator erstellen. Eine Netzwerkschnittstelle verbindet die lokale Einheit mit dem externen Rechner, auf dem eine externe Applikation läuft. Zum Aufruf der externen Applikation überträgt die Netzwerkschnittstelle Befehle über ein Netzwerk z.B. das Internet an den externen Rechner. Die Netzwerkschnittstelle empfängt Parameter von der externen Applikation. Die lokale Anwendung erzeugt ein URI-Schema mit Hilfe der von der externen Applikation empfangenen Parameter und ruft den Authentikator auf. Der aufgerufene Authentikator erzeugt und übermittelt ein Ergebnis an den externen Rechner, wobei das Ergebnis z. B. die Verwendung der Applikation auf einen Webserver ermöglicht.

### Figuren

Weitere Eigenschaften und Vorteile der Erfindung ergeben sich aus der folgenden, rein beispielhaften und in keiner Weise beschränkenden Beschreibung bevorzugte Ausführungsformen der Erfindung unter Bezugnahme auf die beigefügten Zeichnungen. Es zeigen:
Fig. 1a und 1 b schematisch ein System mit einer Rückantwort an einen externen Rechner;
Fig. 2a schematisch ein System mit der Weitergabe von signierten Daten an einen externen Rechner;
Fig. 2b und 2c schematisch ein System mit der Weitergabe von verschlüsselten Daten an einen externen Rechner;
Fig. 3a schematisch ein System mit der Erzeugung einer Challange; und
Fig. 3b schematisch ein System mit der Werteingabe der Challange an einem externen Rechner.

### Detaillierte Beschreibung der Erfindung

Es wird für einen Fachmann auf dem Gebiet von Kryptographie-Verfahren und -Systemen ersichtlich, dass die folgende Beschreibung der Ausführungsformen und der Aspekte der Erfindung lediglich zu Illustration bereitgestellt sind, und nicht für den Zweck der Erfindung, welche durch die beigefügten Ansprüche und deren Äquivalente definiert wird, einzuschränken.

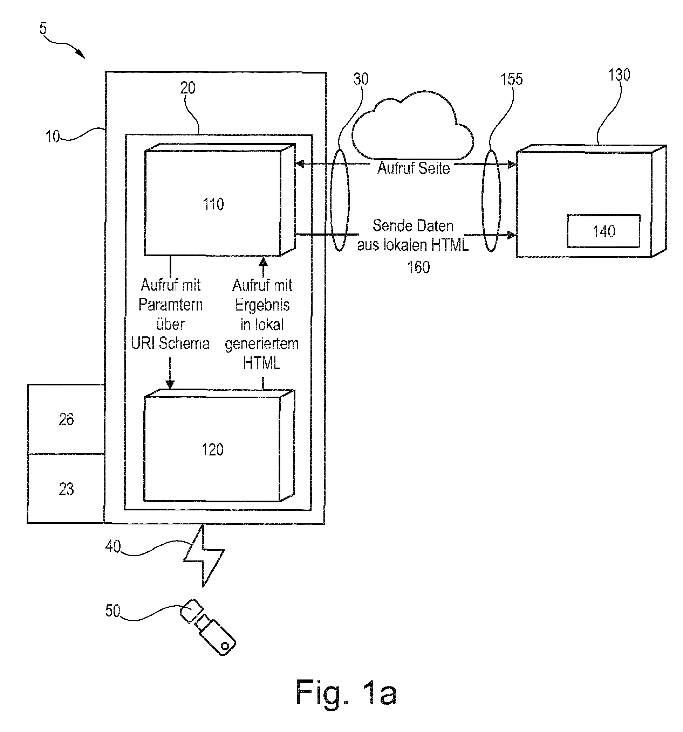

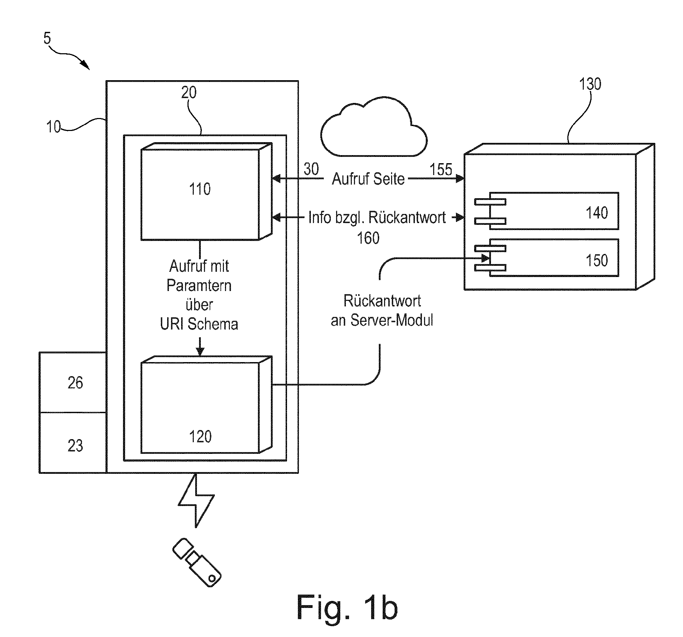

Zunächst wird Bezug auf Figur 1 a genommen. Darin wird schematisch ein System 5 für den Zugriff auf eine externe Applikation 140 auf einen externen Rechner 130 dargestellt. Das System 5 umfasst eine lokale Einheit 10 mit einem Prozessor 20, evtl. einer Graphikkarte 23 und einem Speicherplatz 26. Auf dem Prozessor 20 laufen Programme zur Erzeugung einer lokalen Anwendung 110 und eines Authentikators 120. Die lokale Anwendung 110 ist z.B. ein Browser. Die lokale Einheit 10 ist zum Beispiel ein PC, ein Tablet oder ein Smart Phone.

Die lokale Einheit 10 hat auch eine Netzwerkschnittstelle 30 und eine Sicherheits-Schnittstelle 40. Die Netzwerkschnittstelle 30 ist über ein Netzwerk 160 mit dem Internet oder einem Intranet bzw. Extranet mit einem externen Rechner 130 z. B. einen Webserver verbunden.

Die Sicherheits-Schnittstelle 40 ist z. B. mit einem USB-Stick, oder mit einem Datenträger physikalisch verbunden. Ebenfalls kann die Sicherheits-Schnittstelle 40 eine Funkschnittstelle sein, die mit einem NFC-Chip oder mit einem anderen Gerät z. B. über das Bluetooth-Protokoll verbunden ist.

Der externe Rechner 130 ist ebenfalls über eine Server-Schnittstelle 155 mit dem Internet 160 oder mit einem Extranet bzw. Intranet verbunden. In dem dargestellten Beispiel hat der externe Rechner 130 eine externe Applikation 140, auch Applikationsprogramm genannt, die auf dem externen Rechner 130 läuft.

Der Ablauf des Verfahrens wird nun anhand der Figur 4 beschrieben.

In einem ersten Schritt 400 wird die lokale Anwendung 110 auf der lokalen Einheit 10 aufgerufen. Die lokale Anwendung 110 will auf eine Applikation 140 auf dem externen Rechner 130 zugreifen. Davor muss aber die lokale Anwendung 110 vorab autorisiert werden. Diese Autorisierung erfolgt in dem nächsten Schritt 410 durch Erzeugung einer URI durch ein URI-Schema mittels Parametern, welche von der lokalen Anwendung 110 und/oder der externen Applikation 140 erzeugt werden/sind.

Ein nicht limitierendes Beispiel des Zugriffs ist das Aufrufen einer Webseite auf dem externen Rechner 130. In diesem Fall wird der Nutzer eine IP Adresse oder eine URL in einer Browserzeile in einem Browser 110 eingeben. Diese Eingabe in der Browserzeile zeigt auf die Applikation 140 auf dem externen Server 130 hin. Da die Applikation 140 eine Autorisierung vor dem Zugriff benötigt, übermittelt die Applikation 140 einen URI oder einige Parameter an den Browser (die lokale Anwendung 110). Die lokale Anwendung 110 kann die übermittelten Parameter zur Erzeugung der URI verwenden, wenn der URI nicht unmittelbar durch die Applikation erzeugt wird..

Ein URI (Englisch: Uniform Resource Indicator) ist ein Identifikator, welche eine Ressource auf einem lokalen Rechner oder auf einem externen Rechner bezeichnet. Der URI besteht aus einer Zeichenfolge mit einem Schema, einem Anbieter (Authority), Pfad (Path), Abfrage (Query) und einem Fragment und ist in RFC 3986 des W3C-Konsortiums näher definiert. Ein Beispiel der erzeugten URI ist wie folgt *secunet:*//*authenticator?Protocol=secunet& TokenType= US8Stick& Challenge=A7893 985*

Im Schritt 430 übernimmt der Authentikator 120 die Parameter aus dem erzeugten URI und führt eine Operation durch. Ein Ergebnis wird durch die Operation im Schritt 435 erzeugt. Der Authentikator 120 sendet im Schritt 440 z.B. mittels einer HTML-Seite oder eines HTTPS Protokolls das erzeugte Ergebnis an die lokale Anwendung 110 zurück. Die lokale Anwendung 10 sendet das Ergebnis aus der HTML-Seite an die externe Applikation 140 weiter. Solange das Ergebnis korrekt ist, erhält die lokale Anwendung 110 anschließend den Zugriff auf die Applikation 140 im Schritt 450.

Fig. 1 b zeigt einen weiteren Aspekt des Verfahrens. Die einzelnen Elemente in Fig. 1 b sind weitgehend identisch mit den Elementen aus Fig. 1 a und haben somit die gleichen Bezugszeichen. Auf dem externen Rechner 130 von Fig. 1 b läuft nicht nur die Applikation 140, sondern auch einen Authentifizierungsserver 150. Der Authentifizierungsserver 150 ist über eine Server-Schnittstelle 155 mit dem Netzwerk 160 verbunden. In diesem Aspekt des Verfahrens liefert der Authentikator 120 auf der lokalen Einheit 10 das Ergebnis z.B. eine HTML-Seite (oder über HTTPS-Protokoll) an den Authentifizierungsserver 150 und der Authentifizierungsserver 150 autorisiert die Applikation 140 auf die Anfrage der lokalen Anwendung 110 zu antworten. Eine Rückantwort über die Authentifizierung kann in der lokalen Anwendung 110 angezeigt werden.

Der Authentifizierungsserver 150 kann eine Bibliothek oder ein eigener Server sein. Es können auch mehrere Serverschnittstellen 155 vorhanden sein, die nur mit einer beschränkten Anzahl von Programmen verwendet werden, um die Sicherheit des gesamten Systems 5 zu erhöhen.

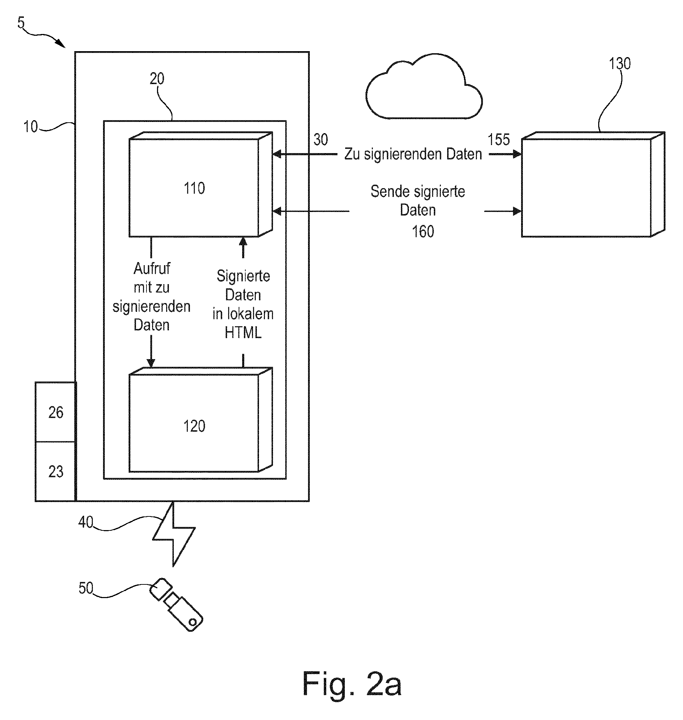

Fig. 2a zeigt einen dritten Aspekt des Verfahrens. Diese Figur verwendet die gleichen Bezugszeichen wie in den anderen Figuren für die gleichen Elemente. Bei diesem Aspekt des Verfahrens stellt die lokale Anwendung 110 Daten her, welche zu signieren sind. Der Anwender wählt das Token für die Signatur aus. Der Authentikator 120 wird mit den zu signierenden Daten und Information zum ausgewählten Token aufgerufen. Der Authentikator 120 stellt das Ergebnis mit den signierten Daten als z.B. eine HTTP-Post her, die an den externen Rechner 130 übermittelt wird.

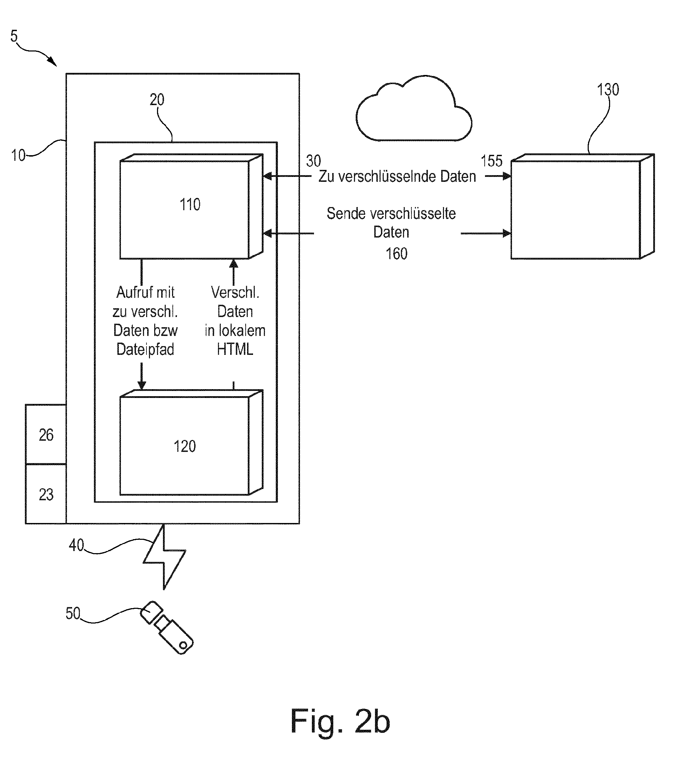

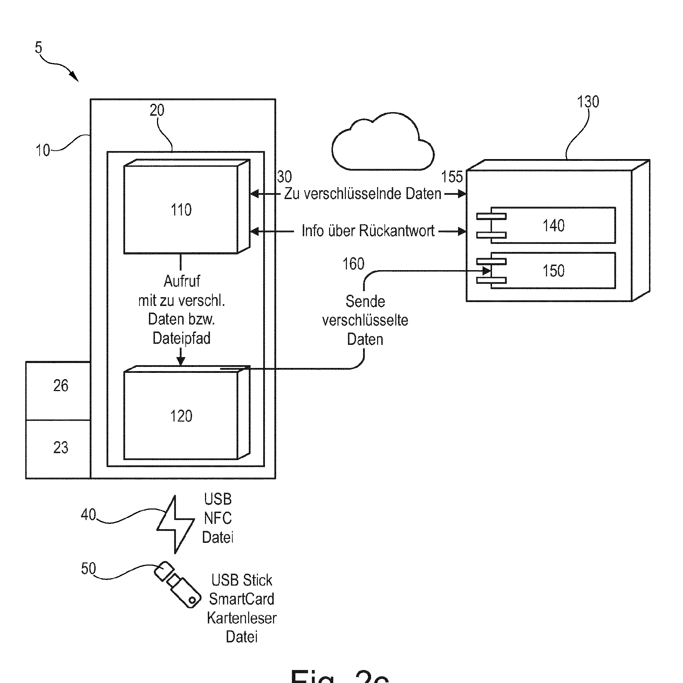

Fig. 2b zeigt ein ähnliches Verfahren wie in Fig. 2a beschrieben. Die Daten sind in diesem Fall verschlüsselt und der Authentikator 20 kann die Daten verschlüsseln und in z.B. eine HTTP-Post an den externen Rechner 130 übermitteln. In Fig. 2c wird die Übermittelung an den externen Rechner 130 über die Server-Schnittstelle 155 an einen Authentifizierungsserver 150 übersandt.

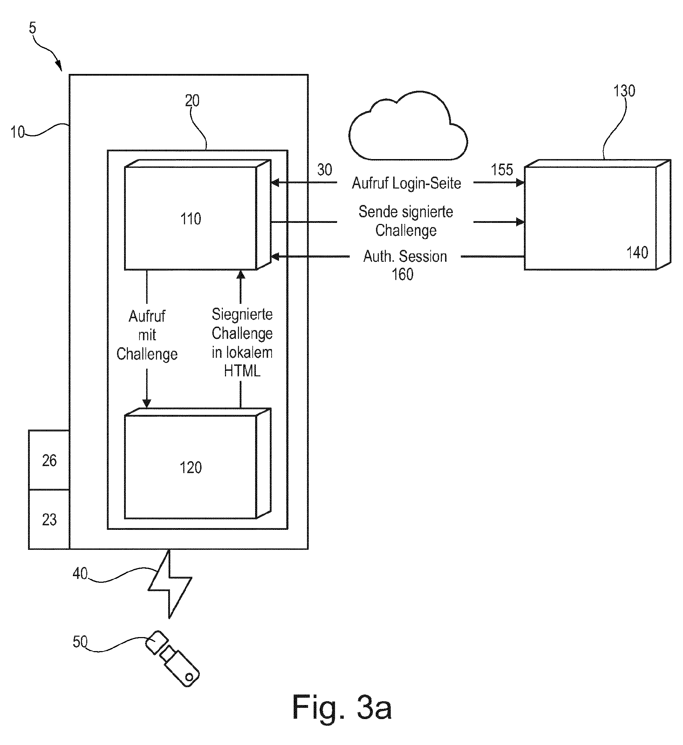

Fig. 3a zeigt einen weiteren Aspekt des Verfahrens. Diese Figur verwendet die gleichen Bezugszeichen wie in den anderen Figuren für die gleichen Elemente. In diesem Aspekt der Erfindung wird in der lokalen Anwendung 110 eine sogenannte Challenge erzeugt. Diese Challenge könnte z.B. eine Eingabemaske in einem Browser für die Eingabe eines Identifikators wie ein Passwort oder PIN-Code sein. Diese Challenge wird an den Authenticator 120 weitergegeben. Der Authentikator 120 verarbeitet und signiert die Challenge mit einem Token und schreibt das Ergebnis z.B. in einen lokalen HTML-Code zurück. Diese signierte Challenge wird als Ergebnis an den externen Rechner 130 übermittelt. Der externe Rechner 130 prüft die signierte Challenge und baut eine Session zwischen der lokalen Einheit 10 und dem externen Rechner 130 auf.

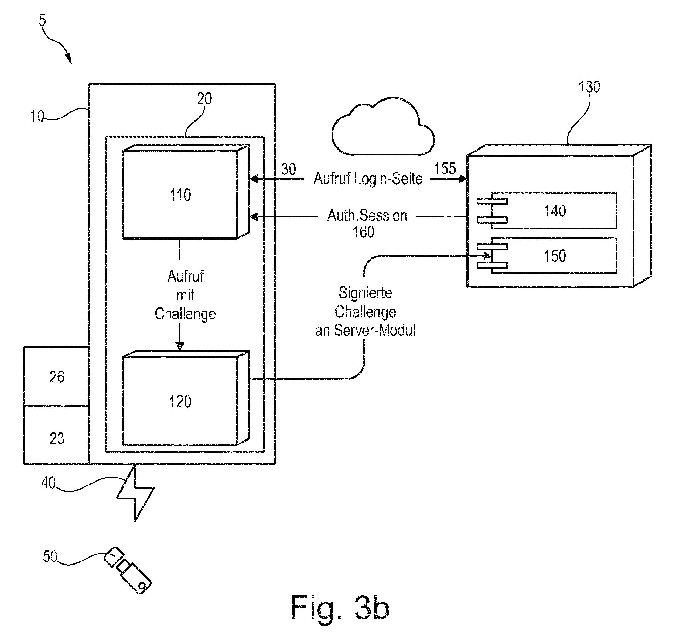

Fig. 3b zeigt einen weiteren Aspekt der Erfindung, bei der die Signierte Challenge über die Server-Schnittstelle 155 an den Authentifizierungsserver 155 übersandt wird.

### Bezugszeichen

- 5: System
- 10: Lokale Einheit
- 20: Prozessor
- 23: Graphikkarte
- 26: Speicherplatz
- 30: Netzwerk-Schnittstelle
- 40: Sicherheits-Schnittstelle
- 50: Sicherheitsvorrichtung
- 110: Lokale Anwendung
- 120: Authentikator
- 130: Externer Rechner
- 140: Externe Applikation
- 150: Authentifizierungsserver
- 155: Server-Schnittstelle
- 160: Netzwerk

## Patentansprüche

1. Verfahren für den Einsatz von Kryptographie-Verfahren umfassend:
Aufrufen (400) einer externen Applikation (140) über eine lokale Anwendung (110), die auf einer lokalen Einheit (10) installiert ist;
Erzeugen (410) eines URI-Schema mit Parametern;
Aufrufen (420) eines Authenticators (120) über die lokale Anwendung (110) durch das erzeugte URI-Schema; und
Erzeugung (435) eines Ergebnisses von dem Authenticator (120).

2. Verfahren nach Anspruch 1, weiter umfassend:
Weiterleitung (440) des erzeugten Ergebnisses an die externe Applikation (140).

3. Verfahren nach Anspruch 1 oder 2, weiter umfassend:
Abfrage eines Identifikators durch den Authenticator (120) vor Erzeugung des Ergebnisses.

4. Verfahren nach Anspruch 1 oder 2, weiter umfassend:
Zugreifen auf eine Sicherheitsvorrichtung (50) durch den Authenticator (120) vor Erzeugung des Ergebnisses.

5. Verfahren nach einem der vorhergehenden Ansprüche, weiter umfassend:
Weiterleiten des Ergebnisses von dem Authenticator (120) an einen Authentifizierungsserver (150).

6. Verfahren nach Anspruch 5, weiter umfassend eine Verarbeitung des Ergebnisses durch einen Authentifizierungsserver (150).

7. Verfahren nach einem der vorhergehenden Ansprüche, wobei das Ergebnis von dem Authenticator (120) eine signierte Challenge ist, und Weiterleitung der signierten Challenge an die externe Applikation (140).

8. Verfahren nach einem der vorhergehenden Ansprüche, wobei das Ergebnis von dem Authenticator (120) verschlüsselte Daten ist, und Weiterleitung der verschlüsselten Daten an die externe Applikation (140).

9. Lokale Einheit (100) umfassend:
einen Prozessor (20) mit einer lokalen Anwendung (110) und einen Authenticator (120);
eine Netzwerk-Schnittstelle (30) zur Verbindung der lokalen Einheit (100) mit einem externen Rechner (130), wobei die Netzwerk-Schnittstelle (30) Befehle zum Starten einer Applikation (140) auf dem externen Rechner (130) überträgt und Parameter von der Applikation (140) empfängt;
wobei die lokale Anwendung (110) mittels eines URI-Schemas und die empfangenen Parameter den Authenticator (120) aufruft; und
wobei der Authenticator (120) ein Ergebnis an den externen Rechner (130) übermittelt.

10. Lokale Einheit (100) nach Anspruch 9, weiter umfassend eine Sicherheits-schnittstelle (40) zur Kontaktherstellung mit einer Sicherheitsvorrichtung (50).
